# EUROPÄISCHE PATENTSCHRIFT

(11) **EP 0 419 803 B1**
(45) Veröffentlichungstag und Bekanntmachung des Hinweises auf die Patenterteilung: **17.03.1993**
(21) Anmeldenummer: 90114432.9
(22) Anmeldetag: 27.07.1990
(51) Int. Cl.: B23Q 11/08

(54) **Teleskopabdeckung**
Telescopic covering
Recouvrement télescopique

(30) Priorität: 28.08.1989 DE 3928379
(43) Veröffentlichungstag der Anmeldung: 03.04.1991
(73) Patentinhaber: Kabelschlepp Gesellschaft mit beschränkter Haftung, 57074 Siegen (DE)
(72) Erfinder: Wehler, Herbert, D-5908 Neunkirchen (DE); Wisser, Georg, D-5239 Luckenbach (DE)

(56) Entgegenhaltungen:
- DE-A- 2 227 971
- DE-A- 3 613 520
- DE-B- 1 300 808
- DE-C- 3 522 884

## Beschreibung

Gegenstand der Erfindung ist eine Teleskopabdeckung für die Führungsbahnen an Werkzeugmaschinen mit einer Anzahl teleskopartig ineinanderschiebbarer Abdeckkästen bestehend aus einer Deckwand, zwei Seitenwänden und einer Rückwand, wobei ein in der Ebene der Rückwand über die Deckwand hinausragender Teil einen Anschlag zur Mitnahme des nächst größeren Abdeckkastens bildet.

Aus der DE-PS 35 22 884 ist eine derartige Teleskopabdeckung bekannt, deren Abdeckkästen aus einem Verbundwerkstoff mit zwei metallischen Deckschichten und einem aus Kunststoff bestehenden Kern zusammengebaut werden. Für den Zusammenbau sind besondere Verbindungsprofile und Nut-Feder-Konstruktionen zwischen Deckwand, Rückwand und Seitenwänden vorgeschlagen worden, die miteinander verschweißt werden. Ungenügend gelöst ist bei der aus dieser Druckschrift bekannten Teleskopabdeckung die gegenseitige Abstützung und Führung der leichten Abdeckkästen. Dafür wird in der EP-OS 0 211 188 eine Einrichtung zum Zusammenhalten und Längsführen der Abdeckkästen vorgeschlagen, welche aus in Bewegungsrichtung verlaufenden Nuten und in diese eingreifenden Führungselementen besteht. Im übrigen soll die Abstützung und Führung der Abdeckkästen aufeinander aber in der von Stahlkonstruktionen her bekannten Weise ausgeführt sein. Es versteht sich von selbst, daß mit den in Bewegungsrichtung verlaufenden Längsnuten die Tragfähigkeit der Abdeckkästen vermindert wird.

Davon ausgehend liegt der Erfindung die **Aufgabe** zugrunde, eine Teleskopabdeckung mit verbesserter Abstützung und Führung zwischen den Abdeckkästen zu schaffen, um den Einsatz von Leichtbau-Verbundplatten und eine damit verbundene, drastische Verminderung des Gewichtes zu ermöglichen.

Als technische **Lösung** wird dafür bei einer Teleskopabdeckung der eingangs genannten Art vorgeschlagen, bei der zwischen der Deckwand und den beiden Seitenwänden jedes Abdeckkastens ein in Bewegungsrichtung verlaufendes Eckprofil angeordnet ist und bei der die Abdeckkästen mit diesen Eckprofilen aufeinander abgestützt und geführt sind.

Bei einer praktischen Ausführungsform können die Eckprofile an der Innenseite der Deckwand und der Seitenwände des nächst größeren Abdeckkastens angeordnet sein. Bei diesem Konstruktionsprinzip ist es möglich, die Deckwand und die Seitenwände mit voneinander getrennten Konstruktionsteilen zu bilden und auf der gesamten Länge eines Abdeckkastens mit den Eckprofilen zu verbinden, die aufeinander reiten. Dabei können die Deckwand und die Seitenwände zwar in herkömmlicher Weise aus Stahlblech zugeschnitten werden, aber der besondere **Vorteil** dieser Konstruktion kommt erst zum Tragen, wenn die Deckwand und/oder die Seitenwände aus einer Leichtbau-Verbundplatte mit dünnen Deckblechen aus Aluminium und einem leichten Kern aus Kunststoff bestehen. Die aus einem Aluminium im Strangpreßverfahren hergestellten Eckprofile können an ihren Längsseiten mit einer Auflage für die Deckwand und die Seitenwände und beiderseits des Krümmungsbereiches mit ineinandergreifenden Profilierungen versehen sein, die an der Unterseite auch das Einrollen eines Gleitprofiles aus Kunststoff gestatten.

Mit den aufeinander reitenden Eckprofilen ist eine grundsätzliche Abkehr von der bisherigen Konstruktionsweise verbunden, bei der die Abdeckkästen sich nur am vorderen freien Ende mit einer quer zur Bewegungsrichtung verlaufenden Gleit- und Abstreifleiste aufeinander abstützen, die deshalb einem großen Verschleiß unterliegt und deshalb ihre Abstreiffunktion nur mangelhaft erfüllen kann. Mit dem erfindungsgemäßen Konstruktionsprinzip ist es möglich, das Gewicht der aufeinander reitenden Abdeckkästen auf die gesamte Länge der in Bewegungsrichtung verlaufenden Eckprofile zu verteilen, die keine Abstreiffunktion übernehmen müssen. Ein Nebeneffekt besteht deshalb auch darin, daß die Abstreifleisten am vorderen freien Ende der Abdeckkästen anders und wirksamer in bezug auf ihre Abstreiffunktion ausgebildet werden können.

In weiterer Ausgestaltung der Erfindung wird vorgeschlagen, den Abstreifer am vorderen freien Ende der Abdeckkästen aus einer Halteleiste aus Aluminium mit einer nach unten offenen Aufnahme, einer darin eingesetzten und vorstehenden, U-förmigen Gleitleiste aus einem Polytetrafluoräthylen (PTFE) und einer zwischen deren Schenkel gehaltenen, weichen Abstreiferlippe aus einem thermoplastischen Elastomer zu bilden. Mit dieser Anordnung ist es möglich, anstelle der Abstreiferlippe aus einem thermoplastischen Elastomer je nach Bedarf auch eine Abstreiferlippe aus weichem Filz oder aus einer Bürste zu verwenden.

Schließlich wird in weiterer Ausgestaltung der Erfindung vorgeschlagen, die Verbindung zwischen der Rückwand und der Deckwand eines Abdeckkastens mit einem auf die Rückwand aufgesteckten, U-förmigen Verbindungsprofil zu lösen, welches gleichzeitig mit einem Tragschenkel die Deckwand trägt und mit einer im rechten Winkel davon nach oben abstehenden Anschlagleiste als Befestigung für ein Abdicht- und Dämpfungsprofil dient. Das Abdicht- und Dämpfungsprofil kann bei einer praktischen Ausführungsform rinnenartig geformt sein und zwei zwischen sich eine Rinne bildende Abstreiflippen haben.

Bei einer nach dieser technischen Lehre ausgebildeten Teleskopabdeckung können Deckwand, die Seitenwände und die Rückwand jedes Abdeckkastens aus einer Leichtbau-Verbundplatte bestehen, die mit ihren benachbarten Rändern in Bewegungsrichtung mit den Eckprofilen und quer dazu mit dem auf der Rückwand befestigten Verbindungsprofil zusammengeklebt werden. Noch einfacher und wirksamer ist eine Montage, Abstützung und Führung der Abdeckkästen kaum noch vorstellbar.

Weitere Einzelheiten und Merkmale ergeben sich aus der nachfolgenden Beschreibung der zugehörigen Zeichnungen, in denen eine bevorzugte Ausführungsform einer erfindungsgemäß ausgebildeten Teleskopabdeckung schematisch dargestellt worden ist. In den Zeichnungen zeigen:

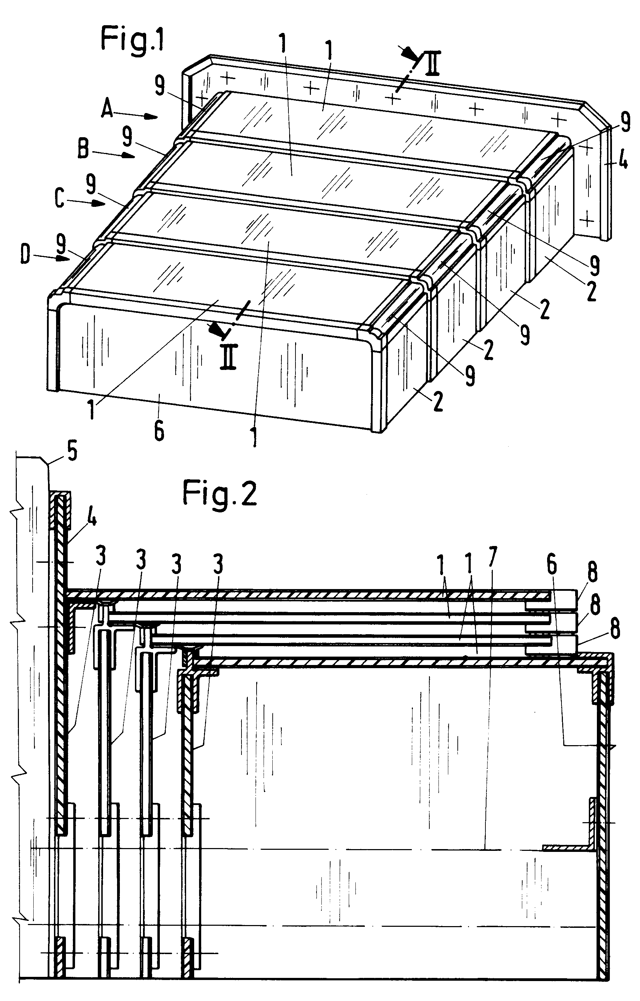

Fig. 1 eine Teleskopabdeckung im ausgezogenen Zustand in perspektivischer Darstellung;
Fig. 2 dieselbe Teleskopabdeckung im zusammengeschobenen Zustand entlang der Linie II-II in Fig. 1 geschnitten in Seitenansicht;

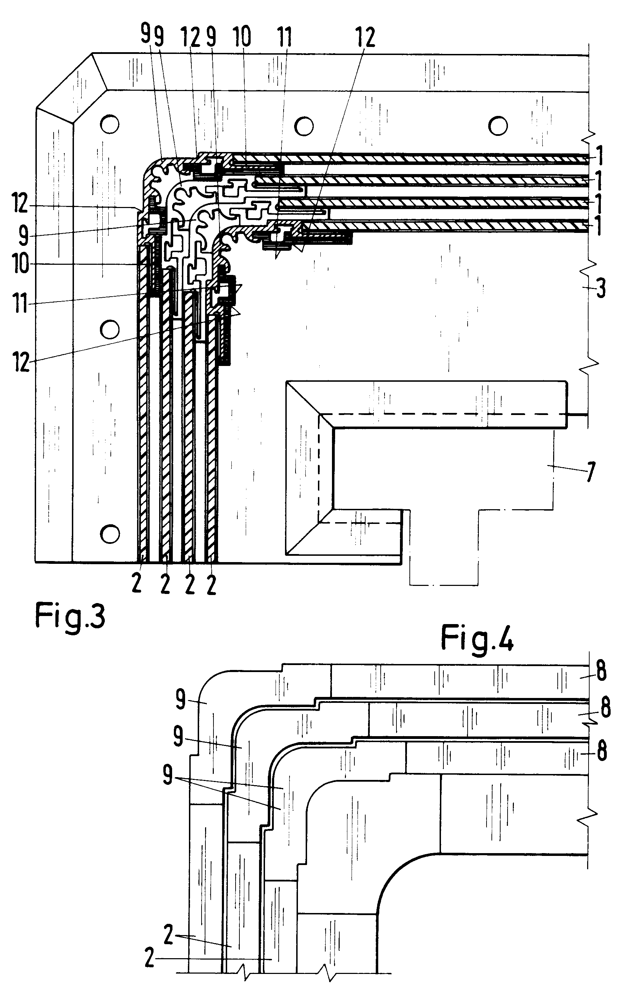

Fig. 3 eine Ecke einer zusammengeschobenen Teleskopabdeckung im Querschnitt;
Fig. 4 eine Ecke einer zusammengeschobenen Teleskopabdeckung in Ansicht;
Fig. 5 eine Abstreiferanordnung im Querschnitt;
Fig. 6 eine Abstreiferlippe aus Filz;
Fig. 7 einen bürstenförmigen Abstreifer;
Fig. 8 eine Verbindung zwischen Deckwand und Rückwand eines Abdeckkastens im Querschnitt.

Eine Teleskopabdeckung besteht aus mehreren, teleskopartig aus- und einfahrbaren Abdeckkästen A, B, C, D, die jeweils aus einer Deckwand 1, zwei Seitenwänden 2 und einer Rückwand 3 gebildet werden. Der größte Abdeckkasten A ist mit einem umlaufenden Flansch 4 am Support 5 einer Werkzeugmaschine befestigt. Der kleinste Abdeckkasten D ist mit einer Vorderwand 6 am Ende einer Führungsbahn 7 befestigt. Die Abdeckkästen B,C und D stützen sich mit ihrer Rückwand 3 ebenfalls auf der Führungsbahn 7 ab. Am vorderen, freien Ende sind zwischen den Abdeckkästen A,B,C und D Abstreifer 8 angeordnet. Die Aufgabe der Teleskopabdeckung besteht darin, die Führungsbahn 7 sauberzuhalten.

Die Deckwand 1 und die beiden Seitenwände 2 jedes Abdeckkastens sind mit in Bewegungsrichtung verlaufenden Eckprofilen 9 verbunden, die aufeinander reiten. Die Eckprofile 9 haben an ihren Längsrändern Auflagen 10 für die Verbindung mit den Deckwänden 1 und Seitenwänden 2. Auf ihrer Innenseite sind die Eckprofile 9 so profiliert, daß Gleitprofile 11 eingerollt werden können, die an der Oberseite des nächst kleineren Abdeckkastens anliegen. Die Eckprofile 9 und Gleitprofile 11 sind mit Absätzen 12 auf- bzw. aneinander geführt und definieren den Abstand zwischen den einzelnen Deckwänden 1 bzw. Seitenwänden 2. Das Gewicht des nächst größeren Abdeckkastens wird auf der gesamten Länge und Breite eines Gleitprofiles 11 auf den nächst kleineren Abdeckkasten übertragen. Der am vorderen freien Ende liegende Abstreifer 8 wird dadurch von jeglicher Tragfunktion befreit.

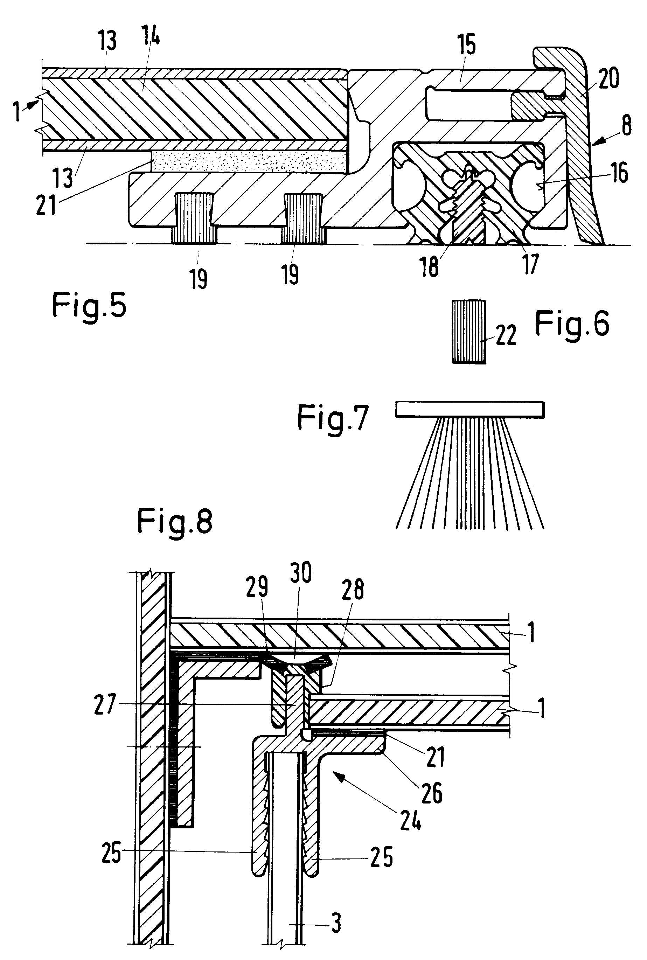

In den Fig. 5 bis 7 ist ein Abstreifer 8 im Querschnitt dargestellt worden. Aus dieser Querschnittszeichnung ist auch erkennbar, daß die Deckwand 1 aus einer Leichtbau-Verbundplatte mit dünnen Deckblechen 13 und einem Kern 14 aus Kunststoff besteht. Der Abstreifer 8 wird gebildet aus einer Halteleiste 15 mit einer nach unten offenen Aufnahme 16, einer darin eingesetzten und vorstehenden, U-förmigen Gleitleiste 17 und einer zwischen deren Schenkel gehaltenen, weichen Abstreiferlippe 18. Auf der Innenseite des Abstreifers 8 sind zwei Stützleisten 19 und auf der Außenseite eine Deckleiste 20 angeordnet. Zwischen der Deckwand 1 und einem Auflageschenkel der Halteleiste 15 liegt ein doppelseitiges Klebeband 21, mit dem die beiden Konstruktionsteile zusammengehalten werden.

Mit dieser Konstruktion ist es möglich, Abstreiferlippen 18 aus einem weichen Material, beispielsweise einem thermoplastischen Elastomer zu verwenden, die einen guten Reinigungseffekt haben. Dabei wird die Abstreiferlippe 18 mit den nach innen vorspringenden Stützrippen der Gleitleiste 17 unter Vorspannung gehalten und auf die darunter liegende Deckwand 1 gedrückt.

Anstelle der Abstreiferlippe 18 aus einem thermoplastischen Elastomer kann auch eine noch weichere Abstreiferlippe 22 aus Filz oder eine Bürste 23 verwendet werden.

Die Verbindung zwischen der Deckwand 1 und einer Rückwand 3 besteht aus einem Verbindungsprofil 24, welches mit zwei Klemmschenkeln 25 die Rückwand übergreift und einen waagerecht abstehenden Tragschenkel 26 für die Deckwand 1 hat. Am Kopf verfügt das Verbindungsprofil 24 über eine Anschlagleiste 27 über die ein Dämpfungsprofil 28 gestülpt ist. Das Dämpfungsprofil 28 liegt der Unterseite der Deckwand 1 des nächst größeren Abdeckkastens mit zwei Abstreiflippen 29 an, die zwischen sich eine Rinne 30 bilden. Die Verbindung zwischen der Deckwand 1 und dem Tragschenkel 26 besteht wiederum aus einem beidseitigen Klebeband 21.

### Bezugszeichenliste

1 Deckwand
2 Seitenwand
3 Rückwand
4 Flansch
5 Support
6 Vorderwand
7 Führung
8 Abstreifer
9 Eckprofil
10 Auflage
11 Gleitprofil
12 Absatz
13 Deckblech
14 Kern
15 Halteleiste
16 Aufnahme
17 Gleitleiste
18 Abstreiferlippe
19 Stützleiste
20 Deckleiste
21 Klebeband
22 Abstreiferlippe
23 Bürste
24 Verbindungsprofil
25 Klemmschenkel
26 Tragschenkel
27 Anschlagleiste
28 Dämpfungsprofil
29 Abstreiferlippe
30 Rinne
A-D Abdeckkasten

## Patentansprüche

1. Teleskopabdeckung für die Führungsbahnen an Werkzeugmaschinen mit einer Anzahl teleskopartig ineinanderschiebbarer Abdeckkästen (A,B,C,D) bestehend aus einer Deckwand (1), zwei Seitenwänden (2) und einer Rückwand (3), wobei ein in der Ebene der Rückwand (3) über die Deckwand (1) hinausragender Teil einen Anschlag zur Mitnahme des nächst größeren Abdeckkastens (A,B,C,D) bildet,
**dadurch gekennzeichnet**,
daß zwischen der Deckwand (1) und den beiden Seitenwänden (2) jedes Abdeckkastens (A,B,C,D) ein in Bewegungsrichtung verlaufendes Eckprofil (9) angeordnet ist und
daß die Abdeckkästen (A,B,C,D) mit diesen Eckprofilen (9) aufeinander abgestützt und geführt sind.

2. Teleskopabdeckung nach Anspruch 1, dadurch gekennzeichnet, daß die Eckprofile (9) an der Innenseite des nächst größeren Abdeckkastens angeordnet sind.

3. Teleskopabdeckung nach den Ansprüchen 1 und 2, dadurch gekennzeichnet, daß die Deckwand (1) und die Seitenwände (2) aus voneinander getrennten Konstruktionsteilen bestehen und auf der gesamten Länge eines Abdeckkastens (A,B,C,D) mit den Eckprofilen (9) verbunden sind.

4. Teleskopabdeckung nach den Ansprüchen 1 bis 3, dadurch gekennzeichnet, daß die Deckwand (1) und/oder die Seitenwände (2) aus einer Leichtbau-Verbundplatte mit dünnen Deckblechen (13) und einem Kern (14) aus Kunststoff bestehen.

5. Teleskopabdeckung nach Anspruch 1, dadurch gekennzeichnet, daß die Eckprofile (9) verschiedener Abdeckkästen (A,B,C,D) an der Ober- und Unterseite mit ineinandergreifenden Profilierungen (Absatz 12) versehen sind.

6. Teleskopabdeckung nach den Ansprüchen 1 bis 5, dadurch gekennzeichnet, daß in die Unterseite der Eckprofile (9) Gleitprofile (11) aus Kunststoff , beispielsweise Polyethylen hoher Dichte eingerollt sind.

7. Teleskopabdeckung nach den Ansprüchen 1 bis 6, dadurch gekennzeichnet, daß die Eckprofile (9) aus Aluminium im Strangpreßverfahren hergestellt sind.

8. Teleskopabdeckung nach den Ansprüchen 1 bis 6, dadurch gekennzeichnet, daß die Deckbleche (13) der Leichtbau-Verbundplatten aus 0,5 mm dickem Aluminium und der Kern (14) aus Polyethylen bestehen.

9. Teleskopabdeckung nach Anspruch 1, mit einem am vorderen Ende der Deckwand (1) und der Seitenwände (2) angeordneten Abstreifer (8), dadurch gekennzeichnet, daß der Abstreifer (8) aus einer Halteleiste (15) mit einer nach unten offenen Aufnahme (16), einer darin eingesetzten und vorstehenden, U-förmigen Gleitleiste (17) und einer zwischen deren Schenkel gehaltenen, weichen Abstreiferlippe (18) besteht.

10. Teleskopabdeckung nach Anspruch 9, dadurch gekennzeichnet, daß die Halteleiste (15) aus Aluminium, die Gleitleiste (17) aus einem Polytetrafluoräthylen (PTFE) und die Abstreiferlippe (18) aus einem thermoplastischen Elastomer bestehen.

11. Teleskopabdeckung nach Anspruch 9, dadurch gekennzeichnet, daß die Abstreiferlippe (22) aus einem weichen Filz besteht.

12. Teleskopabdeckung nach Anspruch 9, dadurch gekennzeichnet, daß die Abstreiferlippe aus einer Bürste (23) besteht.

13. Teleskopabdeckung nach Anspruch 1 mit einem im Bereich der Rückwand (3) über der Ebene der Deckwand (1) hinausragendes Dämpfungsprofil (28), dadurch gekennzeichnet, daß auf die Rückwand (3) ein U-förmiges Verbindungsprofil (24) mit zwei Klemmschenkeln (25) aufgesteckt ist, daß die Deckwand (1) auf einem Tragschenkel (26) aufgelegt ist und daß das Dämpfungsprofil (28) auf einer im rechten Winkel zum Tragschenkel (26) verlaufenden Anschlagleiste (27) aufgesteckt ist.

14. Teleskopabdeckung nach Anspruch 13, dadurch gekennzeichnet, daß das Dämpfungsprofil (28) rinnenartig geformt ist und zwei Abstreiflippen (29) hat, die zwischen sich eine Rinne (30) bilden.

## Claims

1. Telescopic covering for the guide tracks on tool machines, having a number of covering cases (A, B, C, D) which can be inserted one inside the other telescopically and consist of a top wall (1), two side walls (2) and a rear wall (3), one part projecting beyond the top wall (1) in the plane of the rear wall (3) forming a stop for carrying along the next covering case (A, B, C, D) in increasing size, characterised in that a corner profile (9), running in the direction of movement, is arranged between the top wall (1) and the two side walls (2) of each covering case (A, B, C, D), and in that the covering cases (A, B, C, D) are supported on one another and guided by these corner profiles (9).

2. Telescopic covering according to Claim 1, characterised in that the corner profiles (9) are arranged on the inside of the next covering case in increasing size.

3. Telescopic covering according to Claims 1 and 2, characterised in that the top wall (1) and the side walls (2) consist of construction parts, which are separate from one another, and are connected to the corner profiles (9) over the entire length of one covering case (A, B, C, D).

4. Telescopic covering according to Claims 1 to 3, characterised in that the top wall (1) and/or the side walls (2) consist of a lightweight laminated panel having thin metal covering sheets (13) and a core (14) of plastic.

5. Telescopic covering according to Claim 1, characterised in that the corner profiles (9) of different covering cases (A, B, C, D) are provided on the upper sides and undersides with profiles (shoulder 12) which engage one another.

6. Telescopic covering according to Claims 1 to 5, characterised in that sliding profiles (11) made of plastic, for example high density polyethylene, are rolled into the underside of the corner profiles (9).

7. Telescopic covering according to Claims 1 to 6, characterised in that the corner profiles (9) are produced from aluminium by extrusion.

8. Telescopic covering according to Claims 1 to 6, characterised in that the metal covering sheets (13) of the lightweight laminated panels consist of 0.5 mm thick aluminium and the core (14) consists of polyethylene.

9. Telescopic covering according to Claim 1, having a scraper (8) arranged at the front end of the top wall (1) and the side walls (2), characterised in that the scraper (8) consists of a holding strip (15) having a downwardly open receiving part (16), a U-shaped sliding strip (17) which is inserted therein and projects therefrom, and a soft scraper lip (18) held between the limbs of said sliding strip.

10. Telescopic covering according to Claim 9, characterised in that the holding strip (15) consists of aluminium, the sliding strip (17) consists of a polytetrafluoroethylene (PTFE) and the scraper lip (18) consists of a thermoplastic elastomer.

11. Telescopic covering according to Claim 9, characterised in that the scraper lip (22) consists of a soft felt.

12. Telescopic covering according to Claim 9, characterised in that the scraper lip consists of a brush (23).

13. Telescopic covering according to Claim 1, having a damping profile (28) which projects beyond the plane of the top wall (1) in the region of the rear wall (3), characterised in that a U-shaped connecting profile (24) having two clamping limbs (25) is plugged onto the rear wall (3), in that the top wall (1) is placed on a bearing limb (26), and in that the damping profile (28) is plugged onto a stop strip (27) running at right angles to the bearing limb (26).

14. Telescopic covering according to Claim 13, characterised in that the damping profile (28) is of channel-type shape and has two scraper lips (29) which form a channel (30) between them.

## Revendications

1. Elément de recouvrement télescopique pour glissières de guidage sur des machines-outils, comportant un certain nombre de caissons de recouvrement (A, B, C, D) pouvant coulisser les uns dans les autres de manière télescopique, et composés d'une paroi de recouvrement (1), de deux parois latérales (2) et d'une paroi arrière (3), une partie en saillie au-dessus de la paroi de recouvrement (1) dans le plan de la paroi arrière (3), formant une butée pour l'entraînement du caisson de recouvrement (A, B, C, D) plus grand suivant, caractérisé en ce qu'entre la paroi de recouvrement (1) et les deux portes latérales (2) de chaque caisson de recouvrement (A, B, C, D), est disposé un profilé d'angle (9) s'étendant dans la direction du mouvement de déplacement, et en ce que les caissons de recouvrement (A, B, C, D) s'appuient les uns sur les autres et sont guidés par ces profilés d'angle (9).

2. Elément de recouvrement télescopique selon la revendication 1, caractérisé en ce que les profilés d'angle (9) sont disposés sur le côté intérieur du caisson de recouvrement plus grand suivant.

3. Elément de recouvrement télescopique selon les revendications 1 et 2, caractérisé en ce que la paroi de recouvrement (1) et les parois latérales (2) sont constituées de pièces de construction séparées entre-elles et sont reliées sur toute la longueur d'un caisson de recouvrement (A, B, C, D), aux profilés d'angle (9).

4. Elément de recouvrement télescopique selon les revendications 1 à 3, caractérisé en ce que la paroi de recouvrement (1) et/ou les parois latérales (2) sont constituées d'une plaque composite de construction légère comportant de minces tôles de recouvrement (13) et une âme (14) en matière plastique.

5. Elément de recouvrement télescopique selon la revendication 1, caractérisé en ce que les profilés d'angle (9) de différents caissons de recouvrement (A, B, C, D) sont pourvus sur le côté supérieur et sur le côté inférieur, de parties profilées (épaulement 12) s'engageant les unes dans les autres.

6. Elément de recouvrement télescopique selon les revendications 1 à 5, caractérisé en ce que dans le côté inférieur des profilés d'angle (9) sont encastrés par roulage, des profilés de glissement (11) en matière plastique, par exemple en polyéthylène haute densité.

7. Elément de recouvrement télescopique selon les revendications 1 à 6, caractérisé en ce que les profilés d'angle (9) sont fabriqués en aluminium, selon un procédé d'extrusion.

8. Elément de recouvrement télescopique selon les revendications 1 à 6, caractérisé en ce que les tôles de recouvrement (13) des plaques composites de construction légère, sont réalisées en aluminium de 0,5 mm d'épaisseur, et l'âme (14) est réalisée en polyéthylène.

9. Elément de recouvrement télescopique selon la revendication 1, comprenant un racleur (8) disposé à l'extrémité avant la paroi de recouvrement (1) et des parois latérales (2), caractérisé en ce que le racleur (8) est constitué d'une baguette de support (15) présentant un logement (16) ouvert vers le bas, d'une baguette de glissement (17) en forme de "U", montée dans le logement, duquel elle fait saillie, et d'une lèvre de raclage (18) souple, maintenue entre les ailes de la baguette de glissement en forme de "U".

10. Elément de recouvrement télescopique selon la revendication 9, caractérisé en ce que la baguette de support (15) est réalisée en aluminium, la baguette de glissement (17) en un polytétrafluoroéthylène (PTFE), et la lèvre de raclage (18) en un élastomère thermoplastique.

11. Elément de recouvrement télescopique selon la revendication 9, caractérisé en ce que la lèvre de raclage (22) est réalisée en un feutre souple.

12. Elément de recouvrement télescopique selon la revendication 9, caractérisé en ce que la lèvre de raclage est constituée d'une brosse (23).

13. Elément de recouvrement télescopique selon la revendication 1, comportant un profilé d'amortissement (28) faisant saillie au-dessus du plan de la paroi de recouvrement (1) dans la zone de la paroi arrière (3), caractérisé en ce que sur la paroi arrière (3) est emmanché un profilé de liaison (24) en forme de "U" comportant deux ailes de serrage (25), en ce que la paroi de recouvrement (1) repose sur une aile de support (26), et en ce que le profilé d'amortissement (28) est emmanché sur une baguette de butée (27) s'étendant perpendiculairement à l'aile de support (26).

14. Elément de recouvrement télescopique selon la revendication 13, caractérisé en ce que le profilé d'amortissement (28) présente une forme de goulotte et comporte deux lèvres de raclage (29) qui forment entre-elles une goulotte.
